# EUROPÄISCHE PATENTSCHRIFT

(11) **EP 3 681 662 B1**
(45) Veröffentlichungstag und Bekanntmachung des Hinweises auf die Patenterteilung: **25.08.2021**
(21) Anmeldenummer: 18773354.8
(22) Anmeldetag: 07.09.2018
(51) Int. Cl.: B23D 25/12, B23D 35/00, B23D 36/00

(54) **VORRICHTUNG UND VERFAHREN ZUM QUERTEILEN EINES WARMBANDS**
DEVICE AND METHOD OF CROSS-CUTTING OF A HOT STRIP
DISPOSITIF ET METHODE POUR LA COUPE TRANSVERSALE D'UNE BANDE À CHAUD

(30) Priorität: 13.09.2017 EP 17190932
(43) Veröffentlichungstag der Anmeldung: 22.07.2020
(73) Patentinhaber: Primetals Technologies Austria GmbH, 4031 Linz (AT)
(72) Erfinder: SCHOLLER, Juergen, 3300 Amstetten (AT); VIEHBOECK, Andreas, 4100 Ottensheim (AT); WINKLER, Roman, 4203 Altenberg (AT)
(74) Vertreter: Metals@Linz
(86) Internationale Anmeldenummer: PCT/EP2018/074099
(87) Internationale Veröffentlichungsnummer: WO 2019/052902

(56) Entgegenhaltungen:
- EP-A1- 0 647 484
- JP-A- S53 119 767
- US-B1- 6 449 996

## Beschreibung

Die vorliegende Erfindung betrifft eine Vorrichtung und ein Verfahren zum Querteilen eines Warmbands, vorzugsweise aus Stahl, mittels zweier unterschiedlicher Scheren. Das Dokument EP 0647484 A1 offenbart eine Vorrichtung gemäß dem Oberbegriff des Anspruchs 1 und ein Verfahren gemäß dem Oberbegriff des Anspruchs 9.

Konkret betrifft die Erfindung eine Vorrichtung zum Querteilen eines Warmbands, umfassend eine Kühlstrecke zum Kühlen des Warmbands, zwei unterschiedliche Scheren zum Querteilen des Warmbands und eine nach den Scheren angeordnete Ausfördereinrichtung zum Ausfördern des quergeteilten Warmbands (z.B. eine Aufwickelvorrichtung wie ein Haspel für Warmband oder einen Auslaufbereich für warmgewalzte Platten oder Warmbandabschnitte) .

Das Verfahren zum Querteilen eines Warmbands durch die Vorrichtung umfasst die Verfahrensschritte: Kühlen des Warmbands in einer Kühlstrecke, Querteilen des gekühlten Warmbands und Ausfördern des quergeteilten Warmbands durch eine Ausfördereinrichtung. Dabei wird die Vorrichtung zur Durchführung des Verfahrens verwendet.

Zur Herstellung von Platten und gewickeltem Band kann gemäß der WO 2006/106376 A1 eine erste Schere vor einer Kühlstrecke zum Schneiden von Platten und eine zweite Schere nach der Kühlstrecke zum Schneiden von Band verwendet werden. Die WO 2006/106376 A1 hat das Problem, dass die Schnittbereiche der beiden Scheren durch die Produkte vorgegeben werden. Die Schere für Platten schneidet den gesamten Dickenbereich, in dem Platten produziert werden. Die Schere für Bänder schneidet den gesamten Dickenbereich, in dem Bänder produziert werden. Das bedeutet wiederum, dass die Schnittbereiche durch die zu schneidenden Produktpaletten von Platten bzw. von Bändern vorgegeben werden und nicht variiert werden können, ohne eine der beiden Produktpaletten einzuschränken.

Weiters ist aus der JP 58-122104 A eine Vorrichtung mit zwei identischen Scheren bekannt. Die beiden Scheren sind zum Durchführen von zwei zeitlich kurz aufeinanderfolgenden Schnitten zum Entfernen von Fehlstellen zwischen einem Bandfuß und einem nachfolgenden Bandkopf eines Warmbands notwendig, weil eine einzelne Schere nicht schnell genug zwei hintereinanderfolgende Schnitte des Warmbands durchführen kann. Die Schrift hat das Problem, dass die Scheren jeweils den gesamten Dickenbereich schneiden können müssen.

Die Aufgabe der Erfindung ist es, eine Vorrichtung und ein Verfahren zu schaffen, das ein Querteilen von gekühltem Warmband mit unterschiedlicher Dicke und unterschiedlicher Bandlaufgeschwindigkeit unter Verringerung der Kräfte mit minimiertem Energieverbrauch ermöglicht, wobei das Warmband möglichst spät im Verarbeitungsprozess geteilt und im Bereich der Scheren stabilisiert werden soll.

Einerseits wird diese Aufgabe durch eine Vorrichtung nach Anspruch 1 gelöst.

Unter Warmband im Sinne der Erfindung versteht man warmgewalztes Metallband, insbesondere Stahlband, mit einer Dicke von 0,6 mm bis 28 mm. Durch die Anordnung der beiden unterschiedlichen Scheren nach der Kühlstrecke wird die Kühlung nicht durch den Querteilprozess beeinflusst. Außerdem entstehen keine zusätzlichen Bandköpfe, welche die Kühlstrecke beschädigen könnten; weiters stellt sich in der Kühlstrecke eine eher konstante Geschwindigkeit ein, was zu homogeneren Materialeigenschaften führt. Die beiden Scheren sind als Trommelscheren ausgeführt, weil sich dieser Scherentyp besonders gut für die nachfolgend angegebenen Dickenbereiche und Bandlaufgeschwindigkeiten eignet.

Die erste Trommelschere ist zum Querteilen von dickem Warmband mit einer Dicke von 4 mm bis 28 mm, vorzugsweise von 6 mm bis 28 mm, bei Bandlaufgeschwindigkeiten kleiner als 2,25 m/s, vorzugsweise kleiner als 1,5 m/s, ausgelegt. Hingegen ist die zweite Trommelschere zum Querteilen von dünnem Warmband mit einer Dicke von 0,6 mm bis 6 mm bei Bandlaufgeschwindigkeiten größer als 1,5 m/s ausgelegt.

Um das dünne Warmband vor, während bzw. nach dem Querteilen zu stabilisieren, ist vor der zweiten Trommelschere eine erste Treiberrolleneinheit und nach der zweiten Trommelschere eine zweite Treiberrolleneinheit angeordnet. Zur Stabilisierung des dünnen Warmbands sind die erste und zweite Treiberrolleneinheiten an das dünne Warmband anstellbar.

Die Auswahl der jeweiligen Trommelschere erfolgt in Abhängigkeit der Dicke des Warmband durch eine Auswahleinrichtung, beispielsweise eine Steuerung (z.B. eine speicherprogrammierbare Steuerung SPS, eine Auswahllogik PLC etc.). Die Dicke des Warmbands wird durch eine Dickenbestimmung, z.B. eine Messeinrichtung vor oder nach der Kühlstrecke, bestimmt.

Aus den im folgenden Absatz beschriebenen Merkmalen und physikalischen Zusammenhängen ergeben sich energietechnische Vorteile. Die erste Trommelschere zum Querteilen von dickem Warmband mit Warmbanddicken von 4 mm bis 28 mm, vorzugsweise von 6 mm bis 28 mm, wird genau für diesen Dickenbereich dimensioniert. Dabei definiert die erste Banddickenobergrenze von 28 mm die maximale Schnittkraft der ersten Trommelschere. Die maximale Schnittkraft definiert die Stabilitätsanforderung an die Schere und damit ihre Masse. Die erste Banddickenuntergrenze von 4 mm bzw. 6 mm, definiert durch die zugeordnete maximale Bandlaufgeschwindigkeit von 2,25 m/s, vorzugsweise von 1,5 m/s, das Drehmoment, welches bei der Beschleunigung der Trommelschere auftritt. Die Scherenmasse der rotierenden Scherenteile und die Masse der rotierenden Teile des Antriebsstrangs definieren mit der Geometrie der Anordnung das Massenträgheitsmoment der rotierenden Teile der Scherenanordnung und definieren gemeinsam mit der vom Prozess vorgegebenen Beschleunigungsdauer das Drehmoment. In Kombination mit der vom Prozess vorgegebenen Beschleunigungsdauer definiert das Drehmoment die zur Beschleunigung benötigte Rotationsenergie. Der Motor muss dabei stark genug ausgeführt sein, um die Beschleunigung der Trommeln der Trommelschere auf Querteilgeschwindigkeit in der gewünschten Zeit sicherzustellen, wobei die Querteilgeschwindigkeit die Umfangsgeschwindigkeit der Trommeln der Trommelschere ist, die in etwa gleich der Bandlaufgeschwindigkeit ist. Die Warmbanddicke von 4 mm bis 28 mm, vorzugsweise von 6 mm bis 28 mm, definiert dadurch die Motoren, die für den Betrieb der ersten Trommelschere geeignet sind. Die Bandlaufgeschwindigkeit von 2,25 m/s, vorzugsweise von 1,5 m/s, ist im Vergleich zu Bandlaufgeschwindigkeiten von 7,5 m/s und mehr für dünne Bänder, wie sie aus WO 2006/106376 A1 bekannt sind, sehr klein. Daher kann aufgrund der kleineren Rotationsenergie für die erste Trommelschere im Vergleich zu der aus WO 2006/106376 A1 bekannten Schere für Warmband mit Warmbanddicken zwischen 0,14 mm und 20 mm und Bandlaufgeschwindigkeiten von beispielsweise 7,54 m/s, bei gleicher Beschleunigungsdauer ein wesentlich kleinerer Motor für die erste Trommelschere verwendet werden, ohne einen negativen Einfluss auf den Querteilprozess zu haben. Damit wird der Energieverbrauch der ersten Trommelschere beim Querteilen reduziert. Für die zweite Trommelschere ist der funktionelle Zusammenhang zwischen Banddickenobergrenze und Banddickenuntergrenze analog zur oben beschriebenen ersten Trommelschere. Für die zweite Trommelschere zum Querteilen von Warmbanddicken von 0,6 mm bis 6 mm wird die max. Schnittkraft beim Querteilen durch die zweite Banddickenobergrenze von 6 mm definiert. Die zweite Trommelschere querteilt allerdings bei wesentlich höheren Bandlaufgeschwindigkeiten von bis zu 20 m/s dünnes Warmband im Bereich der zweiten Banddickenuntergrenze von 0,6 mm. Durch die wesentlich kleinere Trommelschere für Warmbanddicken bis zur Banddickenobergrenze von 6 mm ist es daher möglich, basierend auf der resultierenden kleineren Scherenmasse und dem kleineren Massenträgheitsmoment für die zweite Trommelschere zum Querteilen von Warmbanddicken bis zu 6 mm wesentlich kleinere Motoren zu verwenden, was den Energieverbrauch zum Beschleunigen der zweiten Trommelschere reduziert. Die zweite Banddickenobergrenze und die erste Banddickenuntergrenze sind dabei so gewählt, dass das Querteilen von Warmband über den gesamten Dickenbereich von 0,6 mm bis 28 mm sichergestellt ist. Dies geschieht durch einen Überlapp der Schnittdickenbereiche der beiden Trommelscheren für Banddicken von 4 bis 6 mm. Im Überlapp der Schnittdickenbereiche können beide Trommelscheren für das Querteilen ausgewählt werden, wobei allerdings nur eine der beiden Trommelscheren tatsächlich ausgewählt wird und das Band querteilt. Der Überlapp kann aber auch entfallen. Auch in diesem Fall wäre das Querteilen von Warmband über den gesamten Dickenbereich von 0,6 mm bis 28 mm mit direkt aneinander grenzenden Dickenbereichen sichergestellt.

Bei der zweiten Trommelschere sinkt die Belastung auf die Lagerung aufgrund der kleineren Scherenmasse und der kleineren Querteilkräfte. Daher kann die Lagerung kostengünstiger ausgeführt werden. Eine Einstellvorrichtung für einen Messerspalt ist bei den gewählten Schnittbereichen der Trommelscheren nicht zwingend erforderlich. Zur weiteren Verschleißoptimierung bei den Messern können die erste und/oder die zweite Trommelschere eine Messerspalteinstelleinrichtung enthalten. Weiters besteht die Möglichkeit, dass das Warmband beim Querteilen mit der zweiten Trommelschere aufgrund der hohen Bandlaufgeschwindigkeiten und der geringen Bandsteifigkeit bei geringen Warmbanddicken durch Treiberrollen instabil wird. Die Vorrichtung umfasst daher eine erste und eine zweite Treiberrolleneinheit, die das Warmband stabilisieren und gegebenenfalls den Bandzug im Querteilbereich verringern können. Dadurch eignet sich die Vorrichtung zum Sicherstellen eines sicheren, störungsfreien Querteilens und ein sicherer, störungsfreier Bandlauf des dünnen Warmbands ist im Betrieb der Vorrichtung gewährleistet.

Die Dicke des Warmbands für die Scherenauswahl und optional für die Ansteuerung der Treiberrolleneinheiten ist entweder durch die Vorbearbeitung in einer räumlich getrennten Anlage bekannt (Übergabe eines Dickenwertes des Warmbands als bekannter Materialparameter), oder wird durch eine Dickenbestimmungseinrichtung (meist eine Dickenmessung) ermittelt wie beispielsweise: optische Dickenmessung, mechanische Dickenmessung, elektromagnetische Messung mittels Röntgen- oder Gammastrahlung, Stichabnahme im letzten Walzgerüst einer vorgelagerten Walzstraße, Stichplanrechnung einer vorgelagerten Walzstraße, Berechnung aus dem Massenfluss mithilfe von Bandeinlaufdicke vor dem ersten Walzgerüst in einer vorgelagerten Walzstraße, Bandeinlaufgeschwindigkeit vor dem ersten Walzgerüst und Bandauslaufgeschwindigkeit nach dem letzten Walzgerüst in einer vorgelagerten Walzstraße.

Die Auswahleinrichtung, wie eine Steuerung, ist erfindungsgemäß zumindest mit der Dickenbestimmung und den beiden Trommelscheren wirkverbunden. Vorzugsweise ist die Auswahleinrichtung auch noch mit den beiden Treiberrolleneinheit wirkverbunden, und steuert die Trommelscheren und optional auch die Treiberrolleneinheit aufgrund der Dicke des Warmbands an. Das Ansteuern erfolgt entweder kraft- oder positionsgeregelt, vorzugsweise jedoch kraftgeregelt.

In besonders vorteilhafter Weise wird die Vorrichtung zum Querteilen so ausgeführt, dass gemäß einer ersten bevorzugten Ausführungsform die erste Trommelschere vor der zweiten Trommelschere angeordnet ist und eine dritte Treiberrolleneinheit vor der ersten Trommelschere angeordnet ist, oder dass gemäß einer zweiten bevorzugten Ausführungsform die erste Trommelschere nach der zweiten Trommelschere angeordnet ist und die dritte Treiberrolleneinheit nach der ersten Trommelschere angeordnet ist. Die Angaben "vor" und "nach" beziehen sich auf die Materialflussrichtung des Warmbands.

Somit befindet sich gemäß der ersten bevorzugten Ausführungsform vor der ersten Trommelschere die dritte Treiberrolleneinheit, zwischen der ersten und der zweiten Trommelschere die erste Treiberrolleneinheit und nach der zweiten Trommelschere die zweite Treiberrolleneinheit. Gemäß der zweiten bevorzugten Ausführungsform befindet sich vor der zweiten Trommelschere die erste Treiberrolleneinheit, zwischen der zweiten und der ersten Trommelschere die zweite Treiberrolleneinheit und nach der ersten Trommelschere die dritte Treiberrolleneinheit. Vorzugsweise weist jede Treiberrolleneinheit ein Paar von Treiberrollen auf, die das Warmband klemmen können, wobei zumindest eine Treiberrolle des Paares an das Warmband angestellt werden kann.

Durch diese vorteilhaften Ausgestaltungen ist es möglich, das Warmband beim Querteilen mit der ersten Trommelschere oder mit der zweiten Trommelschere unabhängig von der Anordnung der ersten und der zweiten Trommelschere zu stabilisieren. Dabei wird das Warmband durch jeweils mindestens zwei der ersten, zweiten und dritten Treiberrolleneinheiten stabilisiert und ein Bandzug im Querteilbereich der querteilenden Trommelschere verringert. Dabei ist die Auswahleinrichtung vorzugsweise auch mit der dritten Treiberrolleneinheit wirkverbunden, und steuert diese an.

In besonders vorteilhafter Weise wird die Vorrichtung zum Querteilen so ausgeführt, dass die erste Trommelschere und die zweite Trommelschere zwischen 4 und 10 m voneinander entfernt sind. Durch diese vorteilhafte Ausgestaltung ist zwischen der ersten und der zweiten Trommelschere ausreichend Platz für Wartungsarbeiten an den Trommelscheren und der zwischen den Trommelscheren angeordneten ersten oder zweiten Treiberrolleneinheit. Dabei sind die Rotationsachsen der Trommeln der ersten und der zweiten Trommelschere in horizontaler Richtung zwischen 4 bis 10 m beabstandet.

In einer weiteren besonders vorteilhaften Weise wird die Vorrichtung zum Querteilen so ausgeführt, dass die Ausfördereinrichtung 4 bis 10 m nach der, in Bandlaufrichtung betrachtet, zuletzt angeordneten Trommelschere angeordnet ist. Durch diese Entfernung von 4 bis 10 m ist ausreichend Platz für die Wartung der nach der, in Bandlaufrichtung betrachtet, zuletzt angeordneten Trommelschere und der danach angeordneten zweiten oder dritten Treiberrolleneinheit. Außerdem können in diesem Bereich optional weitere Module wie Messeinrichtungen oder Inspektionseinrichtungen (z.B. Temperaturmessung, Oberflächeninspektion...) angebracht werden. Die horizontale Entfernung von den Rotationsachsen der, in Bandlaufrichtung betrachtet, hinteren Trommelschere bis zum Bandeintrittsbereich in die Ausfördereinrichtung beträgt 4 bis 10 m.

In einer weiteren besonders vorteilhaften Weise wird die Vorrichtung zum Querteilen so ausgeführt, dass die Kühlstrecke eine Warmbandverfolgungseinrichtung und eine Steuer- oder Regeleinrichtung umfasst, die eine gezielte und unterschiedliche Warmbandkühlung von einzelnen Warmbandabschnitten beim Durchlaufen durch die Kühlstrecke ermöglicht. Diese Steuer- oder Regeleinrichtung ermöglicht eine selektive Reduzierung der Kühlung eines Warmbandabschnitts mithilfe einer Nachverfolgungseinrichtung. Durch die reduzierte Kühlung bleibt ein Warmbandabschnitt heißer als die anderen Warmbandabschnitte. Nach der Kühlstrecke wird dann der heißere Warmbandabschnitt von der ersten oder zweiten Trommelschere quergeteilt. Dadurch wird die zum Querteilen benötigte Kraft reduziert.

In einer weiteren besonders vorteilhaften Weise wird die Vorrichtung zum Querteilen so ausgeführt, dass die Vorrichtung zum Querteilen eine der Kühlstrecke vorgelagerte Warmwalzstraße zur Herstellung des Warmbands umfasst. Durch diese vorteilhafte Ausführung kann das in der Warmwalzstraße produzierte Warmband nach dem Walzen quergeteilt werden

In einer weiteren besonders vorteilhaften Weise wird die Vorrichtung zum Querteilen so ausgeführt, dass die Vorrichtung zum Querteilen in einer Gieß-Walz-Verbundanlage (z.B. vom Typ Arvedi ESP, SMS CSP oder Danieli QSP) angeordnet ist und endloses Warmband querteilt. Diese vorteilhafte Anordnung ermöglicht das Produzieren von Warmband in einem Endlosprozess bis nach der Kühlstrecke. Dadurch wird der Energieverbrauch optimiert, die Warmbandqualität erhöht und die Störungsanfälligkeit verringert. Die Anzahl der Anlagenteile, die durch Bandkopf und Bandfuß nach dem Querteilen beschädigt werden kann, wird minimiert. Damit werden auch Beeinträchtigungen der Qualität des Warmbands aufgrund solcher Beschädigungen minimiert (z.B. ungleichmäßige Kühlung durch beschädigte Düsen oder Kühlbalken in der Kühlstrecke).

In einer weiteren besonders vorteilhaften Weise wird die Vorrichtung zum Querteilen so ausgeführt, dass in einem ersten Antriebsstrang der ersten Trommelschere und optional in einem zweiten Antriebsstrang der zweiten Trommelschere jeweils eine koppelbare Schwungmasse angeordnet ist, und mithilfe einer Kupplung in den jeweiligen Antriebsstrang eingekoppelt werden kann. Die koppelbare Schwungmasse ist ein zusätzliches rotierendes Massenelement, das in den Antriebsstrang eingekoppelt werden kann. Das zusätzliche rotierende Massenelement dient zum Speichern von Rotationsenergie für das Querteilen bei langsamen Bandlaufgeschwindigkeiten. Die Schwungmasse ist durch Antriebswellen und eine Kupplung kuppelbar mit dem Getriebe verbunden. Getriebe und Schwungmasse werden über eine Antriebswelle durch einen Motor angetrieben. Eine Antriebswelle überträgt die Energie auf die jeweilige erste oder zweite Trommelschere. Der ersten Trommelschere ist dabei ein erster Antriebsstrang zugeordnet, der ein erstes Getriebe, eine erste Kupplung und eine erste Schwungmasse umfasst. Diese Bestandteile des ersten Antriebsstrangs sind durch Antriebswellen mit einem ersten Motor zum Antreiben des ersten Antriebsstrangs und der ersten Trommelschere verbunden. Der zweiten Trommelschere ist dabei ein zweiter Antriebsstrang zugeordnet, der ein zweites Getriebe, eine zweite Kupplung und eine zweite Schwungmasse umfasst. Diese Bestandteile des zweiten Antriebsstrangs sind durch Antriebswellen mit einem zweiten Motor zum Antreiben des zweiten Antriebsstrangs und der zweiten Trommelschere verbunden.

Die erfindungsgemäße Aufgabe wird ebenfalls durch ein Verfahren nach Anspruch 9 gelöst.

Beim erfindungsgemäßen Verfahren werden folgende Verfahrensschritte durchgeführt: Bestimmung einer Dicke des Warmbands; Auswählen einer ersten Trommelschere für ein dickes Warmband oder einer zweiten Trommelschere für ein dünnes Warmband aufgrund der Dicke des Warmbands, wobei für dickes Warmband mit einer Banddicke von 4 mm bis 28 mm, vorzugsweise von 6 mm bis 28 mm, und einer Bandlaufgeschwindigkeit kleiner als 2,25 m/s, vorzugsweise kleiner als 1,5 m/s, die erste Trommelschere ausgewählt wird und für dünnes Warmband mit einer Banddicke von 0,6 mm bis 6 mm und einer Bandlaufgeschwindigkeit größer als 1,5 m/s die zweite Trommelschere ausgewählt wird; Kühlen des Warmbands in einer Kühlstrecke; Querteilen des gekühlten Warmbands mit der ausgewählten ersten oder zweiten Trommelschere, wobei eine erste Treiberrolleneinheit vor der zweiten Trommelschere und eine zweite Treiberrolleneinheit nach der zweiten Trommelschere an das dünne Warmband angestellt werden und das dünne Warmband beim Querteilen stabilisieren; und Ausfördern des quergeteilten Warmbands durch eine Ausfördereinrichtung. Das Auswählen entweder der ersten oder der zweiten Trommelschere in Abhängigkeit der Dicke des Warmbands erfolgt mittels einer Auswahleinrichtung.

Durch das Querteilen mit einer der beiden Scheren nach der Kühlstrecke durchläuft das Warmband die Kühlstrecke ungeteilt und die Kühlung erfolgt unbeeinflusst vom Querteilprozess. Durch das Vermeiden zusätzlicher, durch Querteilen des Warmbands erzeugter Bandköpfe vor der Kühlstrecke wird das Risiko für eine Beschädigung der Kühlstrecke durch Bankdköpfe minimiert. Aufgrund einer Dickenbestimmung des Warmbands wird eine erste, nach der Kühlstrecke angeordnete Schere oder eine zweite, nach der Kühlstrecke angeordnete Schere ausgewählt und das gekühlte Warmband durch die ausgewählte Schere geteilt. Die zwei unterschiedlichen Scheren sind als Trommelscheren ausgeführt, weil sich diese besonders gut für die angegebenen Dickenbereiche und Bandlaufgeschwindigkeiten eignen. Die energietechnischen Vorteile des Verfahrens sind im Wesentlichen deckungsgleich mit den Vorteilen der Beschreibung der korrespondierenden Vorrichtung weiter oben. Weiters stabilisieren die erste Treiberrolleneinheit und die zweite Treiberrolleneinheit dünnes Warmband beim Querteilen mit der zweiten Trommelschere. Aufgrund der hohen Bandlaufgeschwindigkeiten und der geringen Bandsteifigkeit bei geringen Warmbanddicken ist die zusätzliche Stabilisierung durch Treiberrollen nötig. Dadurch wird ein sicheres, störungsfreies Querteilen und ein sicherer, störungsfreier Bandlauf des dünnen Warmbands gewährleistet. Die Dickenbestimmung erfolgt beispielsweise durch: Übergabe eines Dickenwertes eines Bandes als bekannter Materialparameter, optische Dickenmessung, mechanische Dickenmessung, elektromagnetische Messung mittels Röntgen- oder Gammastrahlung, Stichabnahme im letzten Walzgerüst einer vorgelagerten Walzstraße, Stichplanrechnung einer vorgelagerten Walzstraße, Berechnung aus dem Massenfluss mithilfe von Bandeinlaufdicke vor dem ersten Walzgerüst in einer vorgelagerten Walzstraße, Bandeinlaufgeschwindigkeit vor dem ersten Walzgerüst und Bandauslaufgeschwindigkeit nach dem letzten Walzgerüst in einer vorgelagerten Walzstraße.

In einer vorteilhaften Ausprägung des Verfahrens werden die erste Treiberrolleneinheit und die zweite Treiberrolleneinheit an das Warmband angestellt, im Querteilbereich zwischen den Treiberrolleneinheit wird ein Bandzug reduziert, um das Warmband zu stabilisieren, und das gekühlte Warmband wird mit der zweiten Trommelschere bei reduziertem Zug quergeteilt. Durch die Reduktion des Bandzugs werden die Federkräfte des unter Zug stehenden Warmbands im Querteilbereich des Warmbands verringert. Dadurch wird eine unkontrollierte Beschleunigung des entstehenden neuen Bandkopfes und Bandfußes reduziert und speziell ein Auslenken des Bandkopfes aus der Bandlaufebene verhindert. Weiters werden Zugschwankungen in vor- oder nachgelagerten Anlagenteilen, wie z.B. der Kühlstrecke oder der Ausfördereinrichtung, bei dünnem Warmband reduziert und das Risiko von Bandbeschädigungen verringert.

In einer weiteren vorteilhaften Ausprägung des Verfahrens werden mindestens zwei Treiberrolleneinheiten aus der Gruppe, erste Treiberrolleneinheit, zweite Treiberrolleneinheit und dritte Treiberrolleneinheit, derart an das Warmband angestellt, dass eine ausgewählte Trommelschere, welche für dickes Warmband die erste Trommelschere ist und für dünnes Warmband die zweite Trommelschere ist, in einem Bereich zwischen den angestellten Treiberrolleneinheiten angeordnet ist, wobei die angestellten Treiberrolleneinheiten das Warmband stabilisieren und in dem Bereich zwischen den angestellten Treiberrolleneinheiten einen Bandzug reduzieren, und das gekühlte Warmband mit der ersten oder zweiten Trommelschere bei reduziertem Zug quergeteilt wird. In dieser vorteilhaften Ausprägung des Verfahrens wird im Querteilbereich der beiden Trommelscheren der Bandzug beim Querteilen reduziert oder optional zugfrei quergeteilt. Dies reduziert oder beseitigt die Zugschwankungen in vor- und nachgelagerten Anlagenteilen und erhöht damit die Lebenserwartung dieser Anlagenteile und ermöglicht längere Wartungsintervalle.

In einer weiteren vorteilhaften Ausprägung des Verfahrens wird die Kühlstrecke für einen vorab bestimmten Warmbandabschnitt so angesteuert, dass eine Kühlung in dem Warmbandabschnitt reduziert wird und das Querteilen in dem Warmbandabschnitt erfolgt. Durch die Reduktion der Kühlung wird in diesem Warmbandabschnitt die Temperatur erhöht. Beim Querteilen des heißeren Warmbandabschnitts sinkt die benötigte Kraft und damit die Belastung der Trommelschere. Die Messer und die Lager der Trommelschere werden weniger stark belastet und dadurch werden Lebensdauer und Wartungsintervalle verlängert.

In einer weiteren vorteilhaften Ausprägung des Verfahrens wird die erste Trommelschere in einem Start-Stopp-Modus betrieben, wobei die Trommelschere für das Querteilen des dicken Warmbands ausgehend vom Stillstand der Trommelschere auf eine Querteilgeschwindigkeit beschleunigt wird und nach dem Querteilen des dicken Warmbands angehalten wird. Die erste Trommelschere permanent in Rotation zu halten würde ständig Energie verbrauchen. Dadurch, dass die maximale Geschwindigkeit der erste Trommelschere mit 1,5 m/s limitiert ist, ist eine Beschleunigung der ersten Trommelschere energietechnisch günstiger als die erste Trommelschere permanent zu rotieren. Die Energieeinsparung bei der im Start-Stopp-Modus betriebenen Schere wird durch eine überschüssige Energie definiert, die durch die Beschleunigung des Massenträgheitsmoments auf Querteilgeschwindigkeit in das rotierende System eingebracht wird. Diese überschüssige Energie nimmt mit abnehmender Warmbanddicke und der gleichzeitig zunehmenden Bandlaufgeschwindigkeit zu und ist durch die Rotationsenergie der Masse abzüglich der Energie, die zum Querteilen des Warmbands benötigt wird, definiert. Da die Energie, die im Massenträgheitsmoment gespeichert wird, mit zunehmender Geschwindigkeit größer wird, aber die beim Querteilen benötigte Energie mit der Banddicke abnimmt, wächst die zum Abbremsen benötigte Bremsenergie, die gleich der überschüssigen Energie ist, überproportional. Es ist daher energietechnisch von Vorteil, eine möglichst kleine Scherenmasse auf eine hohe Geschwindigkeit zu beschleunigen und zu bremsen, bzw. eine große Scherenmasse auf weniger hohe Geschwindigkeit zu beschleunigen und abzubremsen.

In einer weiteren vorteilhaften Ausprägung des Verfahrens wird die zweite Trommelschere dauerhaft rotiert, wobei zum Querteilen zumindest eine obere Trommel oder eine untere Trommel in eine Querteilposition bewegt wird, dass ein Messer der oberen Trommel und ein Messer der unteren Trommel beim Querteilen überlappen und das Warmband querteilen. Durch die hohen Querteilgeschwindigkeiten der zweiten Trommelschere ist eine Beschleunigung der Trommelschere energietechnisch ungünstig. Die Trommeln der zweiten Trommelschere werden daher dauerhaft rotiert. Die dauerhafte Rotation führt zu einem permanenten Energieverlust abhängig vom Massenträgheitsmoment. Für den Querteilprozess wird mindestens eine der beiden Trommeln der zweiten Trommelschere mittels eines Antriebs in eine Querteilposition bewegt, wobei die Bewegung der Trommel derart erfolgt, dass bei einer Umdrehung der Trommeln ein Überlapp der Messer der unteren und der oberen Trommeln hergestellt wird, und dadurch das Warmband quergeteilt wird. Nach dem Querteilen werden die Trommeln der Trommelschere ausreichend schnell auseinanderbewegt, dass bei der dem Querteilprozess nachfolgenden Umdrehung der Trommeln das Warmband nicht beschädigt und nicht quergeteilt wird. Dieses Verschieben der mindestens einen Trommel kann beispielsweise durch einen Exzenter oder durch einen Linearantrieb erfolgen. Das Verschieben durch Exzenter oder Linearantrieb ist wiederum eine Beschleunigung der Schere mit anschließenden Abbremsen. Für das Beschleunigen und Abbremsen des Exzenters oder Linearantriebs resultiert die Energieeinsparung ebenfalls aus der Beschleunigung und darauffolgenden Abbremsung einer kleineren Scherenmasse auf eine hohe Geschwindigkeit oder aus der Beschleunigung einer großen Scherenmasse auf eine geringere Geschwindigkeit.

In einer weiteren vorteilhaften Ausprägung des Verfahrens wird das Warmband in einer vorgelagerten Warmwalzstraße gewalzt. Durch diese vorteilhafte Ausführung kann das in der Warmwalzstraße produzierte Warmband nach dem Walzen quergeteilt werden. Beispielsweise kann der Bandkopf und/oder der Bandfuß eines Warmbands abgetrennt werden.

In einer weiteren vorteilhaften Ausprägung des Verfahrens wird das Warmband in einem Endlosbetrieb in einer Gieß-Walz-Verbundanlage produziert. Diese vorteilhafte Ausprägung des Verfahrens ermöglicht das Produzieren von Warmband in einem Endlosprozess, wobei das Warmband bis nach der Kühlstrecke als Endlosband vorliegt, und nach der Kühlstrecke quergeteilt wird. Dadurch wird der Energieverbrauch optimiert, die Warmbandqualität erhöht und die Störungsanfälligkeit verringert. Die Anzahl der Anlagenteile, die nach dem Querteilen durch den beim Querteilen erzeugten neuen Bandkopf und Bandfuß beschädigt werden kann, wird minimiert. Damit werden auch Beeinträchtigungen der Qualität des Warmbands (z.B. ungleichmäßige Kühlung durch beschädigte Düsen oder Kühlbalken in der Kühlstrecke) aufgrund von Beschädigungen oder Stillstandszeiten aufgrund von schwerwiegenden Störungen (z.B. Verkeilen des Bandkopfes in der Kühlstrecke) minimiert.

In einer weiteren vorteilhaften Ausprägung des Verfahrens wird eine koppelbare erste Schwungmasse der ersten Trommelschere aus dem Antriebsstrang ausgekoppelt und nur beim Querteilen bei niedrigen Bandlaufgeschwindigkeiten von z.B. bis zu 1 m/s eingekoppelt, und eine, ggf. ebenfalls koppelbare, zweite Schwungmasse der zweiten Trommelschere ist permanent eingekoppelt. Die koppelbare Schwungmasse ist ein zusätzliches rotierendes Massenelement, das in den Antriebsstrang eingekoppelt werden kann. Das zusätzliche rotierende Massenelement dient zum Speichern von Rotationsenergie für das Querteilen bei langsamen Bandlaufgeschwindigkeiten, bspw. von 0,05 m/s bis 1 m/s. Die Schwungmasse ist durch Antriebswellen und eine Kupplung kuppelbar mit dem Getriebe verbunden. Getriebe und Schwungmasse werden über eine Antriebswelle durch einen Motor angetrieben. Eine Antriebswelle überträgt die Energie auf die jeweilige erste oder zweite Trommelschere.

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:
Fig. 1 eine schematische Darstellung einer Scherenanordnung gemäß der Erfindung
Fig. 2 und 3 alternative Ausführungsformen der Scherenanordnung der Erfindung zu Fig. 1
Fig. 4a eine weitere Ausführungsform der Scherenanordnung
Fig. 4b eine schematische Darstellung der verschiebbaren Trommeln der zweiten Trommelschere mittels Linearantrieb
Fig. 4c eine schematische Darstellung der verschiebbaren Trommeln der zweiten Trommelschere mittels Exzenter Fig. 5 den Ablauf des erfindungsgemäßen Verfahrens
Fig. 6 eine Darstellung einer Scherenanordnung gemäß der Erfindung mit Haspeln als Ausfördereinrichtung Fig. 7 einer Scherenanordnung mit einzelnen Kühlbalken
Fig. 8a, 8b, und 8c die zeitliche Abfolge bei der geänderten Kühlung eines Warmbandabschnitts in der Kühlstrecke bestehend aus 3 Kühlbalken
Fig. 9a eine Seitenansicht einer Ausführungsform der Scherenanordnung
Fig. 9b eine Draufsicht auf die Ausführungsform von Fig. 9a und die Antriebsstränge der beiden Trommelscheren
Fig. 10 eine schematische Darstellung einer Scherenanordnung und das letzte Walzgerüst einer vorgelagerten Warmwalzstraße oder einer Gieß-Walz-Verbundanlage
Fig. 11a die Startposition einer Trommelschere mit fixer Rotationsachse
Fig. 11b die Trommeln einer Trommelschere in der Beschleunigungsphase
Fig. 11c die Trommeln einer Trommelschere mit überlappenden Messern beim Querteilen
Fig. 11d die Trommeln einer Trommelschere in der Abbremsphase
Fig. 11e die Trommeln einer Trommelschere in Endposition
Fig. 11f das Zurückbewegen der Trommeln von der Endposition in die Startposition

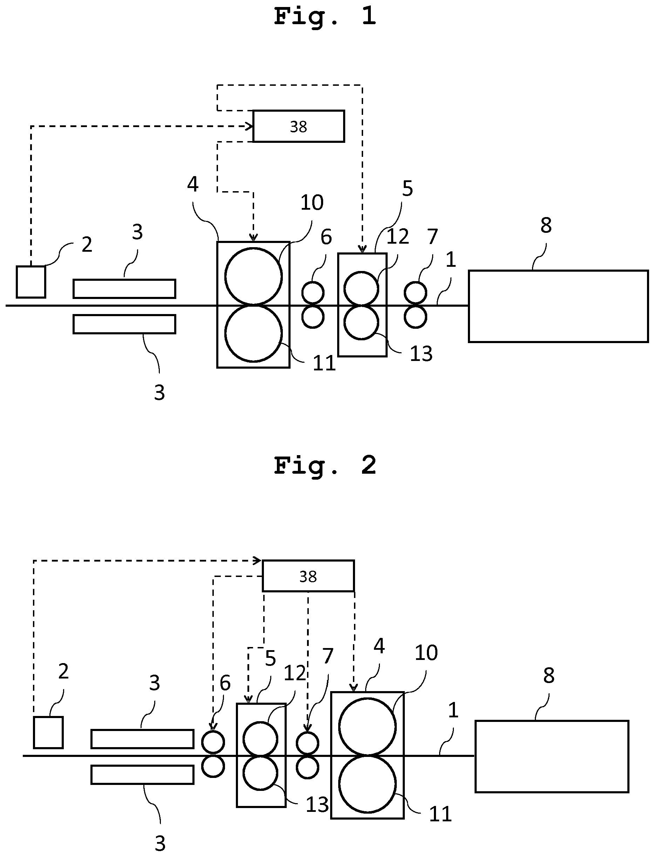

Fig. 1 zeigt eine Scherenanordnung. Die Dicke des einlaufenden Warmbands 1 wird durch eine Dickenbestimmung 2 ermittelt. Im Anschluss wird das ungeschnittene Warmband in einer Kühlstrecke 3 gekühlt. Nach der Kühlstrecke 3 wird das gekühlte Warmband durch eine erste Trommelschere 4 oder eine zweite Trommelschere 5 quergeteilt, wobei dickes Warmband mit Banddicken zwischen 4 und 28 mm, vorzugsweise von 6 mm bis 28 mm, mit Bandlaufgeschwindigkeiten kleiner als 2,25 m/s, vorzugsweise kleiner als 1,5 m/s, von der ersten Trommelschere 4 geteilt wird und dünnes Warmband mit Banddicken zwischen 0,6 und 6 mm mit Bandlaufgeschwindigkeiten größer als 1,5 m/s von der zweiten Trommelschere 5 geteilt wird. Im Fall des Querteilens von dickem Warmband mit der ersten Trommelschere 4 läuft das geteilte Warmband durch die inaktive zweite Trommelschere 5 in die Ausfördereinrichtung 8 und wird dort ausgefördert. Im Fall des Querteilens von dünnem Warmband mit der zweiten Trommelschere 5 läuft das gekühlte Warmband ungeteilt durch die inaktive erste Trommelschere 4. Das Warmband wird dabei durch die angestellte erste Treiberrolleneinheit 6 und die angestellte zweite Treiberrolleneinheit 7 stabilisiert und durch die zweite Trommelschere 5 quergeteilt. Nach dem Querteilen mit der ersten oder der zweiten Trommelschere 4,5 wird das gekühlte und geteilte Warmband durch die Ausfördereinrichtung 8 ausgefördert. Die Auswahl der ersten oder der zweiten Trommelschere 4, 5 erfolgt durch eine als Steuerung ausgebildete Auswahleinrichtung 38 in Abhängigkeit der Dicke des Warmbands 1. Dazu ist die Auswahleinrichtung 38 mit der Dickenbestimmung 2 sowie der ersten und zweiten Trommelschere 4, 5 signaltechnisch verbunden.

Gemäß einer alternativen, nicht dargestellten Ausführungsform zu Fig. 1 könnte die erste Treiberrolleneinheit 6 nach der Kühlstrecke 3 aber noch vor der ersten Trommelschere 4 angeordnet sein, zwischen der ersten und der zweiten Trommelschere 4, 5 keine Treiberrolleneinheit angeordnet sein und nach der zweiten Trommelschere die zweite Treiberrolleneinheit 7 angeordnet sein. Vorteilhaft an dieser Ausführungsform ist, dass der Abstand zwischen den Trommelscheren 4, 5 verkürzt werden kann.

Bei der Scherenanordnung in Fig. 2 ist die erste Trommelschere 5 nach der zweiten Trommelschere 4 angeordnet. Dünnes Warmband wird durch die zweite Trommelschere 5 quergeteilt. Das geteilte dünne Warmband durchläuft die inaktive erste Trommelschere 4 und wird danach durch die Ausfördereinrichtung 8 ausgefördert. Dickes Warmband durchquert die zweite Trommelschere 5 ungeteilt und wird durch die erste Trommelschere 4 quergeteilt und danach von der Ausfördereinrichtung 8 ausgefördert. In diesem Fall ist die Auswahleinrichtung 38 mit der Dickenbestimmung 2, der ersten und zweiten Trommelschere 4,5 sowie der ersten und zweiten Treibrolleneinheit 6, 7 signaltechnisch verbunden.

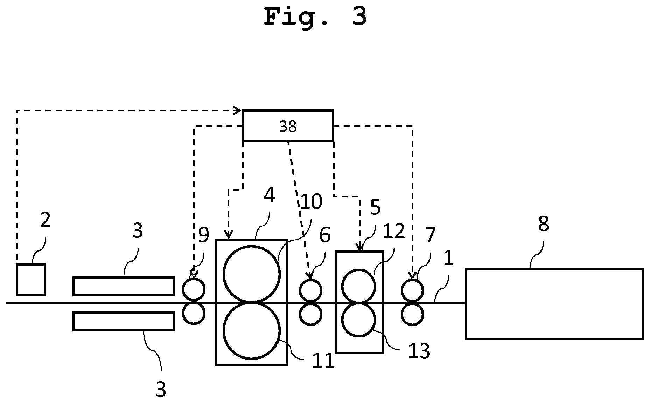

Fig. 3 zeigt die Scherenanordnung der Fig. 1 mit einer zusätzlichen, dritten Treiberrolleneinheit 9 vor der ersten Trommelschere 4. Durch die zusätzliche Treiberrolleneinheit 9 kann beim Querteilen mit beiden Trommelscheren das Warmband stabilisiert werden und bei reduziertem Bandzug quergeteilt werden. Die Auswahleinrichtung 38 ist mit der Dickenbestimmung 2, den Trommelscheren 4,5 sowie der ersten, zweiten und dritten Treiberrolleneinheit 6,7,9 signaltechnisch verbunden.

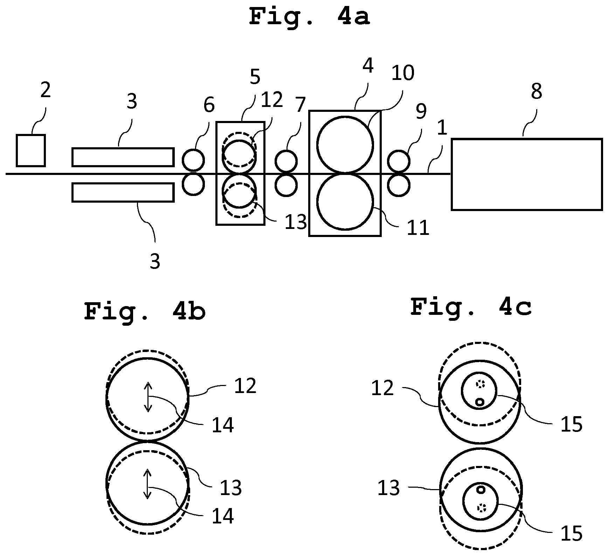

Fig. 4a zeigt die Scherenanordnung der Fig. 2 mit einer zusätzlichen, dritten Treiberrolleneinheit 9 nach der ersten Trommelschere 5. In der Fig. 4a wurde die Auswahleinrichtung 38 nicht dargestellt. In Fig. 4b und 4c wird das Verschieben der Trommeln 10, 11, 12, 13 der beispielsweise der zweiten Trommelschere schematisch dargestellt. Fig. 4b zeigt exemplarisch die Verschiebebewegung der Trommeln mittels eines Linearantriebs 14 und Fig. 4c mithilfe eines Exzenters 15 in welchem die Rotationsachse der Trommel 10, 11, 12, 13 gelagert ist. Die durchgehenden Linien in Fig. 4b zeigen die Trommeln einer Trommelschere zum Zeitpunkt des Querteilens. Die strichlierten Linien in Fig. 4b zeigen die Trommeln 12, 13, wenn das Warmband eine der Trommelscheren ungeschnitten durchläuft. Die Pfeile symbolisieren die Verschiebung der Rotationsachsen mit einem Linearantrieb 14. Die durchgehenden Linien in Fig. 4c zeigen die Trommeln 10, 11, 12, 13 und die Rotationsachsen der Trommeln der Trommelschere zum Zeitpunkt des Querteilens. Die strichlierten Linien in Fig. 4c zeigen die Trommeln 10, 11, 12, 13 und die Rotationsachsen der Trommeln, wenn das Warmband die Trommelschere ungeschnitten durchläuft.

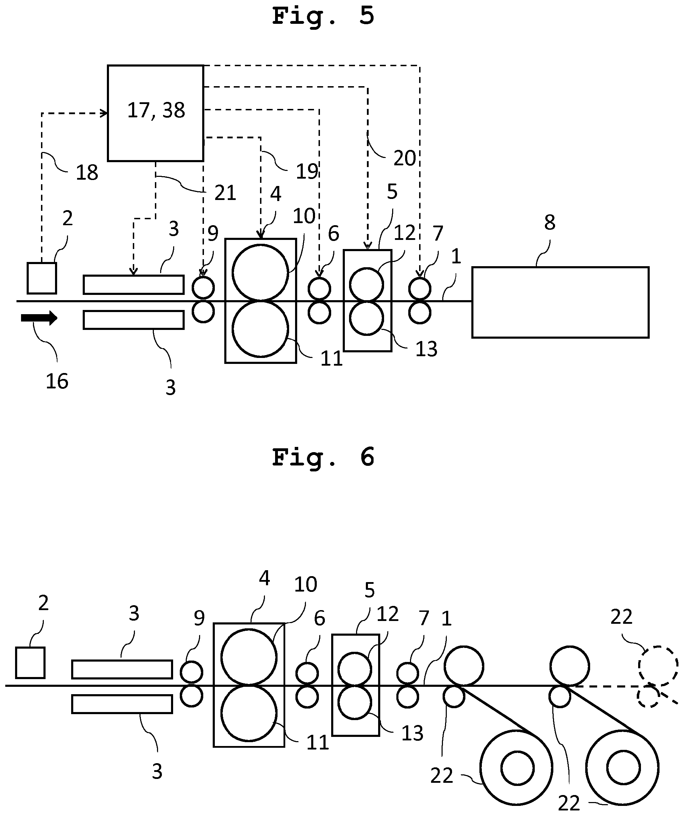

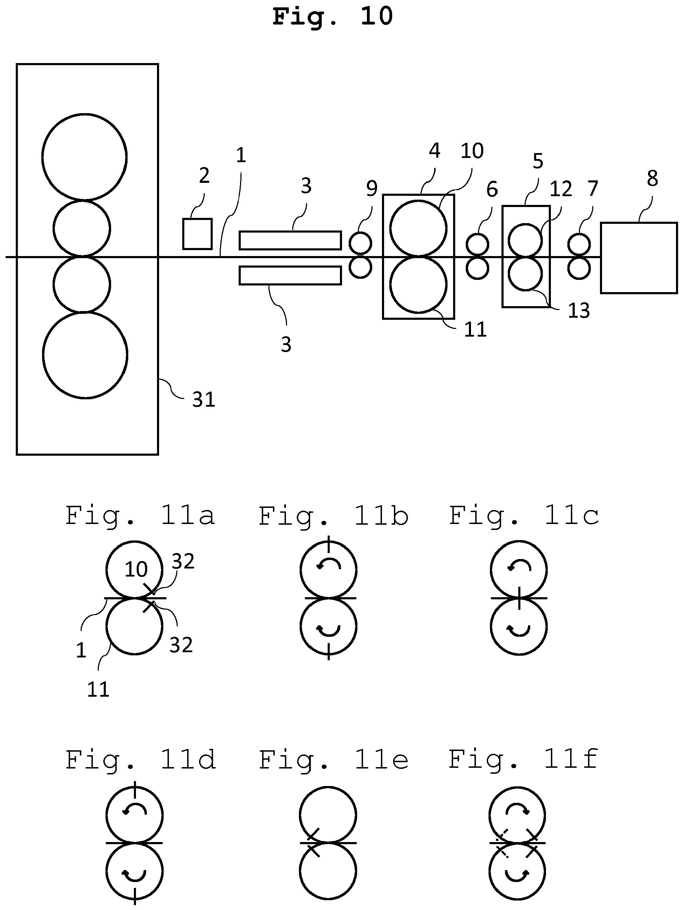

Fig. 5 zeigt eine schematische Darstellung des Querteilprozesses. Zuerst wird eine Banddicke des einlaufenden Warmbands 1 durch die Dickenbestimmung 2 ermittelt. Die ermittelte Banddicke 18 des Warmbands 1 wird an eine Steuereinrichtung oder Regeleinrichtung 17 mit einer Auswahleinrichtung 38 übermittelt, welche eine Trommelschere durch Übermitteln eines Steuersignals 19, 20 an die passende Trommelschere 4, 5 auswählt. Die entsprechende Trommelschere wird dann zeitgerecht beschleunigt, um das Warmband 1 an der gewünschten Stelle querzuteilen. Die Beschleunigung der Trommelscheren kann dabei durch zwei alternative Prozesse erfolgen:
Im ersten Prozess werden der stillstehende Motor, der Antriebsstrang und die ausgewählte Trommelschere aus dem Stillstand beschleunigt. Die Messer der Trommelschere müssen innerhalb von max. einer Umdrehung auf Querteilgeschwindigkeit beschleunigt werden und danach innerhalb von max. einer weiteren Umdrehung wieder gestoppt werden. Nach dem Stoppen der Trommeln können die Trommeln der Trommelschere durch Umkehren der Drehrichtung wieder in die Startposition zurückbewegt werden (siehe auch Fig. 11a bis 11f).
Im zweiten Prozess wird ein Exzenter 15 (Fig. 4c) oder ein Linearantrieb (Fig. 4b) der ausgewählten Trommelschere beschleunigt und eine der rotierenden Trommeln zur zweiten rotierenden Trommel in Schnittposition bewegt, oder beide rotierenden Trommeln aufeinander zu in Schnittposition bewegt. Das Warmband 1 wird in der Kühlstrecke 3 gekühlt, wobei optional die Kühlung aufgrund der ermittelten Banddicke für Warmbandabschnitte oder das gesamte Warmband 1 angepasst werden kann.

Der weitere Ablauf des Querteilprozesses bei Auswahl der ersten Trommelschere 4 ist folgender: Nach dem Verlassen der Kühlstrecke 3 wird das dicke Warmband 1 durch die erste Trommelschere 4 quergeteilt. In Bandlaufrichtung 16 gesehen hinter der ersten Trommelschere 4 kann das Warmband optional durch eine angestellte erste Treiberrolleneinheit 6, eine angestellte zweite Treiberrolleneinheit 7 und eine optionale dritte Treiberrolleneinheit 9 stabilisiert werden. Weiters kann optional zusätzlich der Bandzug zwischen den angestellten Treiberrolleneinheiten reduziert werden, indem das Warmband 1 durch die dritte Treiberrolleneinheit 9 vor der ersten Trommelschere 4 beschleunigt wird und durch die erste Treiberrolleneinheit 6 oder die zweite Treiberrolleneinheit 7 hinter der ersten Trommelschere 4 gebremst wird, wodurch der Bandzug im Bereich zwischen den zur Bremsung und Beschleunigung verwendeten Treiberrolleneinheiten verringert wird. Das gekühlte und durch die Treiberrollen stabilisierte Warmband 1 wird dann an der gewünschten Stelle durch ein zeitgerechtes Starten des Querteilprozesses mit der ersten Trommelschere 4 quergeteilt. Danach wird das geteilte dicke Warmband durch die inaktive, zweite Trommelschere 5 geführt und von der nachfolgenden Ausfördereinrichtung 8 ausgefördert.

Der weitere Querteilprozessablauf bei Auswahl der zweiten Trommelschere 5 ist folgender: Nach dem Verlassen der Kühlstrecke 3 durchläuft das ungeteilte dünne Warmband die inaktive erste Trommelschere 4. In Bandlaufrichtung 16 gesehen hinter der ersten Trommelschere 4 wird es durch die angestellte erste Treiberrolleneinheit 6 und die angestellte zweite Treiberrolleneinheit 7 stabilisiert. Optional kann zusätzlich der Bandzug zwischen den angestellten Treiberrolleneinheiten reduziert werden, indem das Warmband 1 durch die erste Treiberrolleneinheit 6 oder die dritte Treiberrolleneinheit 9 vor der zweiten Trommelschere 5 beschleunigt wird und durch die zweite Treiberrolleneinheit 7 hinter der zweiten Trommelschere 5 gebremst wird, wodurch der Bandzug zwischen im Bereich zwischen den zur Bremsung und Beschleunigung verwendeten Treiberrolleneinheiten verringert wird. Das gekühlte und durch die Treiberrollen stabilisierte Warmband 1 wird dann an der gewünschten Stelle durch ein zeitgerechtes Starten des Querteilprozesses mit der zweiten Trommelschere 5 quergeteilt und von der nachfolgenden Ausfördereinrichtung 8 ausgefördert.

Fig. 6 zeigt exemplarisch eine schematische Scherenanordnung wie in Fig. 4, wobei die Ausfördereinrichtung 8 aus zwei oder mehr Haspeln 22 besteht. Das Warmband wird nach dem Querteilen von einem der nachfolgenden Haspeln 22 aufgewickelt, wobei ein Haspel den Bandfuß aufwickelt, und ein zweiter Haspel den direkt nachfolgenden Bandkopf anwickelt. Nachdem der Bandfuß fertig aufgewickelt ist, wird der Bund vom Haspel 22 abgezogen und der Haspel 22 für das Anwickeln des nächsten Bandkopfes vorbereitet. Weitere Haspeln 22 dienen als Ersatzhaspel bei Störungen und Wartungsarbeiten. Die Auswahleinrichtung ist in Fig. 6 nicht dargestellt.

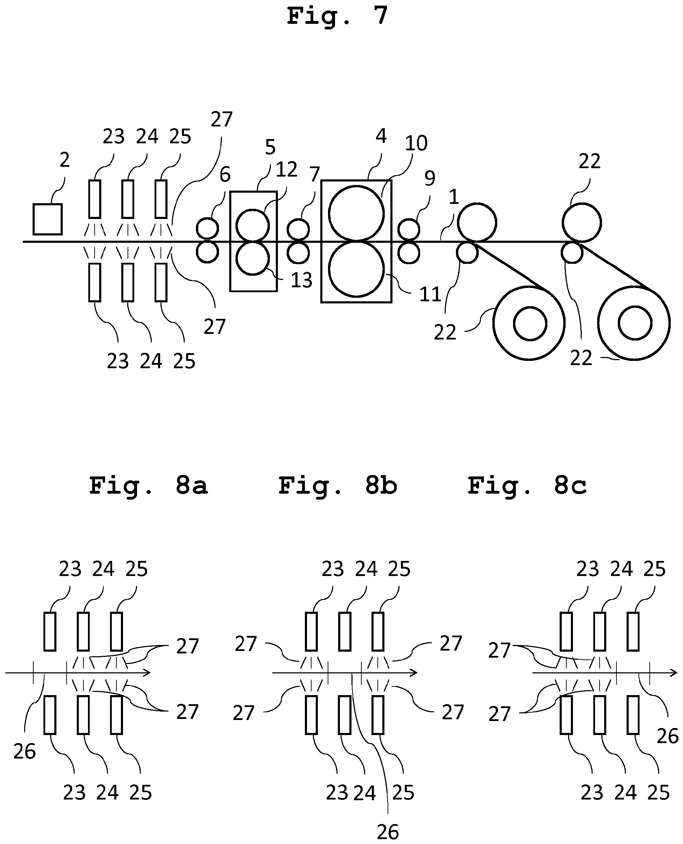

Fig. 7 zeigt eine ähnliche schematische Scherenanordnung wie Fig. 6. Im Vergleich zu Fig. 6 ist die Reihenfolge der Trommelscheren 4, 5 vertauscht, das heißt, dass dünnes Warmband wie beispielsweise in Fig. 2 vor der ersten Trommelschere 4 von der zweiten Trommelschere 5 quergeteilt wird und dickes Warmband ungeschnitten durch die zweite Trommelschere 5 zur ersten Trommelschere 4 läuft. Die Kühlbalken der Kühlstrecke 3 sind exemplarisch durch drei Kühlbalken 23, 24, 25 dargestellt. Es können allerdings auch mehr als drei Kühlbalken zur Kühlung verwendet werden. Auch hier wurde auf die Darstellung der Auswahleinrichtung verzichtet.

Fig. 8a, Fig. 8b und Fig. 8c zeigen den zeitlichen Verlauf der Schaltung der Kühlzonen, um einen Warmbandabschnitt speziell zu kühlen. In Fig. 8a befindet sich der Warmbandabschnitt 26 unter dem ersten Kühlbalken 23. Dieser ist in dem Zeitraum, in dem sich der Warmbandabschnitt 26 unter diesem Kühlbalken befindet, deaktiviert. Alle anderen Warmbandabschnitte werden normal gekühlt. Nachdem der Warmbandabschnitt 26 den Bereich des ersten Kühlbalkens 23 verlassen hat, wird der Kühlbalken wieder eingeschaltet. Dies ist in Fig. 8b zu sehen. Der erste Kühlbalken 23 ist wieder eingeschaltet. Der zweite Kühlbalken 24 ist nun deaktiviert, weil sich der Warmbandabschnitt 26 nun unter dem zweiten Kühlbalken 24 befindet. Sobald der Warmbandabschnitt 26 den Bereich des zweiten Kühlbalkens 24 verlassen hat, wird der zweite Kühlbalken 24 wieder aktiviert. Der Warmbandabschnitt befindet sich nun unter dem dritten Kühlbalken 25 (Fig. 8c) der Kühlstrecke. Dies wird für alle Kühlbalken oder eine gewünschte Anzahl der Kühlbalken einer Anlage wiederholt, bis die gewünschte Temperaturabweichung im Warmbandabschnitt 26 erzielt wird. Neben dem Abschalten ist alternativ eine Reduktion der Kühlintensität möglich. Die Abschaltung wurde als Beispiel zur Veranschaulichung des Prinzips gewählt. Wenn der Warmbandabschnitt 26 größer gewählt wird können auch mehrere nebeneinanderliegende Kühlbalken gleichzeitig deaktiviert sein oder deren Kühlintensität reduziert werden. Das Kühlwasser 27 ist in den Figuren 7, 8a, 8b und 8c schematisch dargestellt.

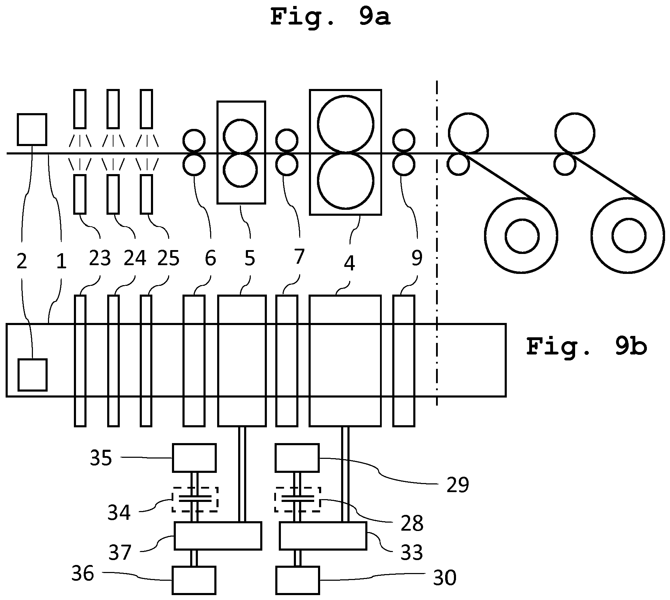

Fig. 9 zeigt die Aggregate der Scherenanordnung in einer Seitenansicht und einer Ansicht von oben. Die Ansicht von oben enthält eine Darstellung der Antriebsstränge der ersten und der zweiten Trommelschere. Der ersten Trommelschere 4 ist dabei ein erster Antriebsstrang zugeordnet, der ein erstes Getriebe 33, eine erste Kupplung 28 und eine erste Schwungmasse 29 umfasst. Diese Bestandteile des ersten Antriebsstrangs sind durch Antriebswellen miteinander, mit der ersten Trommelschere 4 und einem ersten Motor 30 zum Antreiben des ersten Antriebsstrangs und der ersten Trommelschere 4 verbunden. Der zweiten Trommelschere 5 ist dabei ein zweiter Antriebsstrang zugeordnet, der ein zweites Getriebe 37, eine zweite Kupplung 34 und eine zweite Schwungmasse 35 umfasst. Diese Bestandteile des zweiten Antriebsstrangs sind durch Antriebswellen miteinander, mit der zweiten Trommelschere 5 und einem zweiten Motor 36 zum Antreiben des zweiten Antriebsstrangs und der zweiten Trommelschere 5 verbunden. Jede der beiden Trommelscheren ist mit einer Antriebswelle mit dem zugehörigen Getriebe 33, 37 verbunden. Die Getriebe 33, 37 wiederum sind durch eine weitere Antriebswelle mit dem jeweiligen Motor 30, 36 verbunden. Zusätzlich führt noch eine weitere Antriebswelle vom jeweiligen Getriebe 33, 37 über eine jeweilige Kupplung 28, 34 zu einer jeweiligen Schwungmasse 29, 35. Diese Schwungmasse 29, 35 kann durch die Kupplung 28, 34 optional in den Antriebsstrang eingekoppelt werden und dient zum Speichern von Rotationsenergie für das Querteilen.

Fig. 10. zeigt das letzte Walzgerüst 31 einer der Scherenanordnung vorgelagerten Warmwalzanlage oder einer Gieß-Walz-Verbundanlage. In der Anlage wird Warmband 1 produziert, das mit der nachgereihten Scherenanordnung gekühlt, quergeteilt und ausgefördert wird.

In den Figuren 9 und 10 wurde wiederum auf die Darstellung der Auswahleinrichtung verzichtet.

Die Fig. 11a bis 11f zeigen den Verlauf des Schneideprozesses bei beispielsweise der ersten Trommelschere 4 mit ortsfesten Rotationsachsen der beiden Trommeln 10, 11 der Trommelschere.

Fig. 11a zeigt die Trommeln 10, 11 der Trommelschere in der Startposition. Die Trommeln 10, 11 der Trommelschere stehen still. Die Messer 32 in Ruheposition berühren das Warmband 1 nicht.

Fig. 11b zeigt die Trommeln 10, 11 in der Beschleunigungsphase, die Trommeln 10, 11 werden beschleunigt. Die Drehrichtung der Trommeln 10, 11 beschleunigt die Messer 32 die sich aus der Startposition betrachtet vom Band 1 wegbewegen.

Fig. 11c zeigt die Trommeln 10, 11, die sich im Vergleich zu Fig. 11b um 180° in der angegebenen Drehrichtung weiterbewegt haben. Die Messer der Trommeln 10, 11 überlappen und das Band wird quergeteilt.

Fig. 11d zeigt die Trommeln 10, 11 nach einer weiteren Drehung um 180°. In dieser Figur werden die Trommeln gebremst. Die Bremsung beginnt nach dem abgeschlossenen Querteilen und ist spätestens bei Erreichen der in Fig. 11e dargestellten Endposition abgeschlossen. Es ist wichtig, dass die Messer 32 das Warmband 1 nicht berühren, da dies zu Beschädigungen des Warmbands 1 führen würde.

Fig. 11f zeigt strichliert die Trommeln 10, 11 der Trommelschere in Endposition. Die Drehrichtung 24 wird umgekehrt und die Trommelschere solange gedreht, bis die Messer in Startposition sind (Fig. 11a). In dieser Position verweilen die Trommeln 10, 11 bis zum Start des nächsten Querteilvorgangs.

### Bezugszeichenliste

- 1: Warmband
- 2: Dickenbestimmung
- 3: Kühlstrecke
- 4: Erste Trommelschere
- 5: Zweite Trommelschere
- 6: Erste Treiberrolleneinheit
- 7: Zweite Treiberrolleneinheit
- 8: Ausfördereinrichtung
- 9: Dritte Treiberrolleneinheit
- 10: Obere Trommel erste Trommelschere
- 11: Untere Trommel erste Trommelschere
- 12: Obere Trommel zweite Trommelschere
- 13: Untere Trommel zweite Trommelschere
- 14: Verschiebung mit Linearantrieb
- 15: Exzenter
- 16: Bandlaufrichtung
- 17: Bandverfolgungseinrichtung und Steuer oder Regeleinrichtung
- 18: Signal Dickenbestimmung
- 19: Steuersignal erste Schere
- 20: Steuersignal zweite Schere
- 21: Optionales Steuersignal oder Regelsignal für Kühlstrecke
- 22: Haspel mit zugehöriger Treiberrolleneinheit
- 23: Erster Kühlbalken
- 24: Zweiter Kühlbalken
- 25: Dritter Kühlbalken
- 26: Bandabschnitt
- 27: Kühlwasser
- 28: erste Kupplung
- 29: erste Schwungmasse
- 30: erster Motor
- 31: Walzgerüst einer Warmwalzstraße oder einer Gieß- Walz-Verbundanlage
- 32: Messer
- 33: erstes Getriebe
- 34: zweite Kupplung
- 35: zweite Schwungmasse
- 36: zweiter Motor
- 37: zweites Getriebe
- 38: Steuerung

## Patentansprüche

1. Vorrichtung zum Querteilen eines Warmbands (1), umfassend:
- eine Kühlstrecke (3) zum Kühlen des Warmbands (1),
- eine Messeinrichtung (2) vor oder nach der Kühlstrecke (3) zur Bestimmung der Dicke des Warmbands (1),
- zwei unterschiedliche Scheren (4, 5) zum Querteilen des Warmbands (1),
- eine nach den Scheren (4, 5) angeordnete Ausfördereinrichtung (8) zum Ausfördern des quergeteilten Warmbands (1),
**dadurch gekennzeichnet, dass** die zwei Scheren (4, 5) unterschiedlich sind und nach der Kühlstrecke (3) angeordnet sind und Trommelscheren sind, umfassend eine erste Trommelschere (4) und eine zweite Trommelschere (5),
- wobei die erste Trommelschere (4) zum Querteilen von dickem Warmband mit Dicken von 4 mm bis 28 mm bei Bandlaufgeschwindigkeiten kleiner als 2,25 m/s geeignet ist,
- wobei die zweite Trommelschere (5) zum Querteilen von dünnem Warmband mit Dicken von 0,6 mm bis 6 mm bei Bandlaufgeschwindigkeiten größer als 1,5 m/s geeignet ist,
- wobei vor der zweiten Trommelschere (5) eine erste Treiberrolleneinheit (6) und nach der zweiten Trommelschere (5) eine zweite Treiberrolleneinheit (7) angeordnet ist, und die erste und zweite Treiberrolleneinheiten (6, 7) an das dünne Warmband anstellbar sind,
- wobei eine Auswahleinrichtung (38), die zumindest mit der Dickenbestimmung (2), der ersten Trommelschere (4) und der zweiten Trommelschere (5) wirkverbunden ist, die erste Trommelschere (4) oder die zweite Trommelschere (5) in Abhängigkeit der Dicke des Warmbands (1) auswählt.

2. Vorrichtung nach Anspruch 1, **dadurch gekennzeichnet,**
- **dass** die erste Trommelschere (4) vor der zweiten Trommelschere (5) angeordnet ist und eine dritte Treiberrolleneinheit (9) vor der ersten Trommelschere (4) angeordnet ist, oder
- **dass** die erste Trommelschere (4) nach der zweiten Trommelschere (5) angeordnet ist und die dritte Treiberrolleneinheit (9) nach der ersten Trommelschere (4) angeordnet ist.

3. Vorrichtung nach einem der vorherigen Ansprüche, **dadurch gekennzeichnet,**
- **dass** die erste Trommelschere (4) und die zweite Trommelschere (5) zwischen 4 und 10 m voneinander entfernt sind.

4. Vorrichtung nach einem der vorherigen Ansprüche, **dadurch gekennzeichnet,**
- **dass** die Ausfördereinrichtung (8) 4 bis 10 m nach der, in Bandlaufrichtung (16) betrachtet, zuletzt angeordneten Trommelschere (4 oder 5) angeordnet ist.

5. Vorrichtung nach einem der vorherigen Ansprüche, **dadurch gekennzeichnet,**
- **dass** die Kühlstrecke (3) eine Warmbandverfolgungseinrichtung und eine Steuer- oder Regeleinrichtung (17) umfasst, die eine gezielte und unterschiedliche Warmbandkühlung von einzelnen Warmbandabschnitten (26) beim Durchlaufen durch die Kühlstrecke (3) ermöglicht.

6. Vorrichtung nach einem der vorherigen Ansprüche, **dadurch gekennzeichnet,**
- **dass** die Vorrichtung zum Querteilen eine der Kühlstrecke (3) vorgelagerte Warmwalzstraße (31) zur Herstellung des Warmbands (1) umfasst.

7. Vorrichtung nach einem der vorherigen Ansprüche, **dadurch gekennzeichnet,**
- **dass** die Vorrichtung zum Querteilen in einer Gieß-Walz-Verbundanlage (31) angeordnet ist und vorzugsweise endlos produziertes Warmband (1) querteilt.

8. Vorrichtung nach einem der vorherigen Ansprüche, **dadurch gekennzeichnet,**
- **dass** in einem ersten Antriebsstrang der ersten Trommelschere (4) und/oder in einem zweiten Antriebsstrang der zweiten Trommelschere (5) jeweils eine koppelbare Schwungmasse (29), (35) angeordnet ist und die jeweilige Schwungmasse mithilfe einer Kupplung (28), (34) in den jeweiligen Antriebsstrang eingekoppelt werden kann.

9. Verfahren zum Querteilen eines Warmbands (1) durch eine Vorrichtung nach einem der vorhergehenden Ansprüche, umfassend die Verfahrensschritte:
- Messen einer Dicke des Warmbands (1) vor oder nach einer Kühlstrecke (3);
- Auswählen einer ersten Trommelschere (4) für ein dickes Warmband oder einer zweiten Trommelschere (5) für ein dünnes Warmband aufgrund der Dicke (2) des Warmbands (1),
- wobei für dickes Warmband mit einer Dicke von 4 mm bis 28 mm, vorzugsweise von 6 mm bis 28 mm, und einer Bandlaufgeschwindigkeit kleiner als 2,25 m/s die erste Trommelschere (4) ausgewählt wird, und für dünnes Warmband mit einer Dicke von 0,6 mm bis 6 mm und einer Bandlaufgeschwindigkeit größer als 1,5 m/s die zweite Trommelschere (5) ausgewählt wird;
- Kühlen des Warmbands (1) in der Kühlstrecke (3);
- Anstellen einer erste Treiberrolleneinheit (6) vor der zweiten Trommelschere (5) und einer zweite Treiberrolleneinheit (7) nach der zweiten Trommelschere (5) an das dünne Warmband um das dünne Warmband beim Querteilen zu stabilisieren;
- Querteilen des gekühlten Warmbands (1) mit der ausgewählten ersten (4) oder zweiten Trommelschere (5); und
- Ausfördern des quergeteilten Warmbands (1) durch eine Ausfördereinrichtung (8).

10. Verfahren nach Anspruch 9, **dadurch gekennzeichnet,**
- **dass** die erste Treiberrolleneinheit (6) und die zweite Treiberrolleneinheit (7) an das dünne Warmband angestellt werden und in einem Bereich zwischen den Treiberrolleneinheiten (6, 7) einen Bandzug reduzieren um das dünne Warmband zu stabilisieren, und
- das gekühlte dünne Warmband mit der zweiten Trommelschere (5) bei reduziertem Zug quergeteilt wird.

11. Verfahren nach den Ansprüchen 9 und 10, **dadurch gekennzeichnet,**
- **dass** mindestens zwei Treiberrolleneinheiten aus der Gruppe, erste Treiberrolleneinheit (6), zweite Treiberrolleneinheit (7) und dritte Treiberrolleneinheit (9), derart an das Warmband (1) angestellt werden, dass eine ausgewählte Trommelschere, welche für dickes Warmband die erste Trommelschere (4) ist und für dünnes Warmband die zweite Trommelschere (5) ist, in einem Bereich zwischen den angestellten Treiberrolleneinheiten angeordnet ist, wobei die angestellten Treiberrolleneinheiten das Warmband (1) stabilisieren und in dem Bereich zwischen den angestellten Treiberrolleneinheiten einen Bandzug reduzieren,
- und das gekühlte Warmband mit der ausgewählten ersten (4) oder zweiten Trommelschere (5) bei reduziertem Zug quergeteilt wird.

12. Verfahren nach den Ansprüchen 9 bis 11, **dadurch gekennzeichnet,**
- **dass** die Kühlstrecke (3) für einen vorab bestimmten Warmbandabschnitt (26) so angesteuert wird, dass eine Kühlung in dem Warmbandabschnitt (26) reduziert wird und das Querteilen in dem Warmbandabschnitt (26) erfolgt.

13. Verfahren nach den Ansprüchen 9 bis 12, **dadurch gekennzeichnet,**
- **dass** die erste Trommelschere (4) in einem Start-Stopp-Modus betrieben wird, wobei die Trommelschere (4) für das Querteilen des dicken Warmbands ausgehend vom Stillstand der Trommelschere (4) auf eine Querteilgeschwindigkeit beschleunigt wird,
- und die erste Trommelschere (4) nach dem Querteilen des dicken Warmbands angehalten wird.

14. Verfahren nach den Ansprüchen 9 bis 13, **dadurch gekennzeichnet,**
- **dass** die zweite Trommelschere (5) dauerhaft rotiert, wobei zum Querteilen zumindest eine obere Trommel oder eine untere Trommel der zweiten Trommelschere (5) in eine Querteilposition bewegt wird, dass ein Messer der oberen Trommel und ein Messer der unteren Trommel beim Querteilen überlappen und das dünne Warmband querteilen.

15. Verfahren nach den Ansprüchen 9 bis 14, **dadurch gekennzeichnet,**
- **dass** das Warmband (1) in einer der Vorrichtung zum Querteilen vorgelagerten Warmwalzstraße gewalzt wird.

16. Verfahren nach den Ansprüchen 9 bis 15, **dadurch gekennzeichnet,**
- **dass** das Warmband (1) in einer Gieß-Walz-Verbundanlage, vorzugsweise im Endlosbetrieb, produziert wird.

17. Verfahren nach den Ansprüchen 9 bis 15, **dadurch gekennzeichnet,**
- **dass** eine koppelbare erste Schwungmasse (29) der ersten Trommelschere (4) aus dem ersten Antriebsstrang ausgekoppelt ist und nur für das Querteilen bei niedrigen Bandlaufgeschwindigkeiten von bis zu 1 m/s eingekoppelt wird, und
- eine, vorzugsweise koppelbare, zweite Schwungmasse (35) der zweiten Trommelschere (5) permanent eingekoppelt ist.

## Claims

1. Apparatus for cutting to length of a hot-rolled strip (1), comprising:
- a cooling section (3) for cooling the hot-rolled strip (1),
- a measuring device (2) upstream or downstream of the cooling section (3) for determining the thickness of the hot-rolled strip (1),
- two different shears (4, 5) for cutting to length of the hot-rolled strip (1),
- a discharging device (8) which is arranged downstream of the shears (4, 5) for discharging the hot-rolled strip (1) which has been cut to length,
**characterized in that** the two shears (4, 5) are different and are arranged downstream of the cooling section (3) and are drum shears, comprising a first drum shear (4) and a second drum shear (5),
- the first drum shear (4) being suitable for cutting to length of thick hot-rolled strip with thicknesses of from 4 mm to 28 mm at strip running speeds of less than 2.25 m/s,
- the second drum shear (5) being suitable for cutting to length of thin hot-rolled strip with thicknesses of from 0.6 mm to 6 mm at strip running speeds of greater than 1.5 m/s,
- a first drive roller unit (6) being arranged upstream of the second drum shear (5), and a second drive roller unit (7) being arranged downstream of the second drum shear (5), and it being possible for the first and second drive roller units (6, 7) to be set against the thin hot-rolled strip,
- a selection device (38) which is operatively connected at least to the thickness determination means (2), the first drum shear (4) and the second drum shear (5) selecting the first drum shear (4) or the second drum shear (5) in a manner which is dependent on the thickness of the hot-rolled strip (1).

2. Apparatus according to Claim 1, **characterized**
- **in that** the first drum shear (4) is arranged upstream of the second drum shear (5), and a third drive roller unit (9) is arranged upstream of the first drum shear (4), or
- **in that** the first drum shear (4) is arranged downstream of the second drum shear (5), and the third drive roller unit (9) is arranged downstream of the first drum shear (4).

3. Apparatus according to either of the preceding claims, **characterized**
- **in that** the first drum shear (4) and the second drum shear (5) are between 4 and 10 m apart from one another.

4. Apparatus according to one of the preceding claims, **characterized**
- **in that** the discharging device (8) is arranged, as viewed in the strip running direction (16), from 4 to 10 m downstream of the drum shear (4 or 5) which is arranged last.

5. Apparatus according to one of the preceding claims, **characterized**
- **in that** the cooling section (3) comprises a hot-rolled strip tracking device and a control or regulating device (17) which makes targeted and different hot-rolled strip cooling of individual hot-rolled strip sections (26) when running through the cooling section (3) possible.

6. Apparatus according to one of the preceding claims, **characterized**
- **in that** the apparatus for cutting to length comprises a hot rolling mill (31) for producing the hot-rolled strip (1), which hot rolling mill (31) is positioned upstream of the cooling section (3).

7. Apparatus according to one of the preceding claims, **characterized**
- **in that** the apparatus for cutting to length is arranged in a combined casting and rolling installation (31), and preferably cuts endlessly produced hot-rolled strip (1) to length.

8. Apparatus according to one of the preceding claims, **characterized**
- **in that** in each case one flywheel mass (29), (35) which can be coupled is arranged in a first drive train of the first drum shear (4) and/or in a second drive train of the second drum shear (5), and the respective flywheel mass can be coupled into the respective drive train with the aid of a clutch (28), (34) .

9. Method for cutting to length of a hot-rolled strip (1) by way of an apparatus according to one of the preceding claims, comprising the method steps:
- measuring a thickness of the hot-rolled strip (1) upstream or downstream of a cooling section (3);
- selecting of a first drum shear (4) for a thick hot-rolled strip or of a second drum shear (5) for a thin hot-rolled strip on the basis of the thickness (2) of the hot-rolled strip (1),
- the first drum shear (4) being selected for thick hot-rolled strip with a thickness of from 4 mm to 28 mm, preferably of from 6 mm to 28 mm, and a strip running speed of less than 2.25 m/s, and the second drum shear (5) being selected for thin hot-rolled strip with a thickness of from 0.6 mm to 6 mm and a strip running speed of greater than 1.5 m/s;
- cooling of the hot-rolled strip (1) in the cooling section (3) ;
- setting of a first drive roller unit (6) upstream of the second drum shear (5) and of a second drive roller unit (7) downstream of the second drum shear (5) against the thin hot-rolled strip, in order to stabilize the thin hot-rolled strip during cutting to length;
- cutting to length of the cooled hot-rolled strip (1) by way of the selected first (4) or second drum shear (5); and
- discharging of the hot-rolled strip (1) which has been cut to length by way of a discharging device (8).

10. Method according to Claim 9, **characterized**
- **in that** the first drive roller unit (6) and the second drive roller unit (7) are set against the thin hot-rolled strip, and reduce a strip tension in a region between the drive roller units (6, 7), in order to stabilize the thin hot-rolled strip, and
- the cooled thin hot-rolled strip is cut to length by way of the second drum shear (5) with reduced tension.

11. Method according to Claims 9 and 10, **characterized**
- **in that** at least two drive roller units from the group consisting of first drive roller unit (6), second drive roller unit (7) and third drive roller unit (9) are set against the hot-rolled strip (1) in such a way that a selected drum shear which is the first drum shear (4) for thick hot-rolled strip and the second drum shear (5) for thin hot-rolled strip is arranged in a region between the drive roller units which have been thrown on, the drive roller units which have been thrown on stabilizing the hot-rolled strip (1), and reducing a strip tension in the region between the drive roller units which have been thrown on,
- and the cooled hot-rolled strip being cut to length by way of the selected first (4) or second drum shear (5) with reduced tension.

12. Method according to Claims 9 to 11, **characterized**
- **in that** the cooling section (3) is actuated for a predefined hot-rolled strip section (26) in such a way that cooling in the hot-rolled strip section (26) is reduced and cutting to length takes place in the hot-rolled strip section (26) .

13. Method according to Claims 9 to 12, **characterized**
- **in that** the first drum shear (4) is operated in a start-stop mode, the drum shear (4) for the cutting to length of the thick hot-rolled strip being accelerated, starting from the standstill of the drum shear (4), to a cutting to length speed,
- and the first drum shear (4) being stopped after the cutting to length of the thick hot-rolled strip.

14. Method according to Claims 9 to 13, **characterized**
- **in that** the second drum shear (5) rotates permanently, at least one upper drum or one lower drum of the second drum shear (5) being moved into a cutting to length position for the cutting to length operation, and in that a blade of the upper drum and a blade of the lower drum overlap during the cutting to length operation and cut the thin hot-rolled strip to length.

15. Method according to Claims 9 to 14, **characterized**
- **in that** the hot-rolled strip (1) is rolled in a hot rolling mill which is positioned upstream of the apparatus for cutting to length.

16. Method according to Claims 9 to 15, **characterized**
- **in that** the hot-rolled strip (1) is produced in a combined casting and rolling installation, preferably in endless operation.

17. Method according to Claims 9 to 15, **characterized**
- **in that** a first flywheel mass (29), which can be coupled, of the first drum shear (4) is decoupled from the first drive train and is coupled only for the cutting to length operation at low strip running speeds of up to 1 m/s, and
- a second flywheel mass (35), which can preferably be coupled, of the second drum shear (5) is permanently coupled.

## Revendications

1. Dispositif de coupe transversale d'une bande à chaud (1), comprenant :
- une section de refroidissement (3) pour le refroidissement de la bande à chaud (1),
- un dispositif de mesure (2) avant ou après la section de refroidissement (3), pour la détermination de l'épaisseur de la bande à chaud (1),
- deux cisailles différentes (4, 5) pour la coupe transversale de la bande à chaud (1),
- un dispositif d'évacuation (8) disposé après les cisailles (4, 5), pour l'évacuation de la bande à chaud (1) coupée transversalement,
**caractérisé en ce que** les deux cisailles (4, 5) sont différentes et sont disposées après la section de refroidissement (3) et sont des cisailles à tambours, comprenant une première cisaille à tambours (4) et une seconde cisaille à tambours (5),
- dans lequel la première cisaille à tambours (4) est adaptée à la coupe transversale d'une bande à chaud épaisse d'épaisseur comprise entre 4 mm et 28 mm à des vitesses de défilement de bande inférieures à 2,25 m/s,
- dans lequel la seconde cisaille à tambours (5) est adaptée à la coupe transversale d'une bande à chaud mince d'épaisseur comprise entre 0,6 mm et 6 mm à des vitesses de défilement de bande supérieures à 1,5 m/s,
- dans lequel une première unité à rouleaux entraîneurs (6) est disposée avant la seconde cisaille à tambours (5) et une deuxième unité à rouleaux entraîneurs (7) est disposée après la seconde cisaille à tambours, et les première et deuxième unités à rouleaux entraîneurs (6, 7) peuvent être mises en place contre la bande à chaud mince,
- dans lequel un dispositif de sélection (38), qui est relié fonctionnellement au moins avec la détermination d'épaisseur (2), la première cisaille à tambours (4) et la seconde cisaille à tambours (5), sélectionne la première cisaille à tambours (4) ou la seconde cisaille à tambours (5) en fonction de l'épaisseur de la bande à chaud (1).

2. Dispositif selon la revendication 1, **caractérisé**
- **en ce que** la première cisaille à tambours (4) est disposée avant la seconde cisaille à tambours (5) et une troisième unité à rouleaux entraîneurs (9) est disposée avant la première cisaille à tambours (4), ou
- **en ce que** la première cisaille à tambours (4) est disposée après la seconde cisaille à tambours (5) et la troisième unité à rouleaux entraîneurs (9) est disposée après la première cisaille à tambours (4).

3. Dispositif selon l'une des revendications précédentes, **caractérisé**
- **en ce que** la première cisaille à tambours (4) et la seconde cisaille à tambours (5) sont éloignées l'une de l'autre de 4 m à 10 m.

4. Dispositif selon l'une des revendications précédentes, **caractérisé**
- **en ce que** le dispositif d'évacuation (8) est disposé 4 m à 10 m après la cisaille à tambours (4 ou 5) qui, par rapport à la direction de défilement de bande (16), vient en dernier.

5. Dispositif selon l'une des revendications précédentes, **caractérisé**
- **en ce que** la section de refroidissement (3) comprend un dispositif de suivi de bande à chaud et un dispositif de commande ou de réglage (17) qui permet un refroidissement ciblé et différent de bande à chaud de segments de bande à chaud (26) individuels lorsqu'une bande à chaud traverse la section de refroidissement (3).

6. Dispositif selon l'une des revendications précédentes, **caractérisé**
- **en ce que** le dispositif de coupe transversale comprend un train de laminage à chaud (31), monté en amont de la section de refroidissement (3), pour la production de la bande à chaud (1).

7. Dispositif selon l'une des revendications précédentes, **caractérisé**
- **en ce que** le dispositif de coupe transversale est situé dans une installation composite de coulée-laminage et effectue une coupe transversale d'une bande à chaud (1) de préférence produite en continu.

8. Dispositif selon l'une des revendications précédentes, **caractérisé**
- **en ce qu'**une masse d'inertie (29), (35) pouvant être couplée est disposée à chaque fois dans un premier groupe motopropulseur de la première cisaille à tambours (4) et/ou dans un second groupe motopropulseur de la seconde cisaille à tambours (5), et la masse d'inertie respective peut être couplée dans le groupe motopropulseur respectif à l'aide d'un accouplement (28), (34).

9. Procédé de coupe transversale d'une bande à chaud (1) au moyen d'un dispositif selon l'une des revendications précédentes, comprenant les étapes de procédé :
- mesure d'une épaisseur de la bande à chaud (1) avant ou après une section de refroidissement (3) ;
- sélection d'une première cisaille à tambours (4) pour une bande à chaud épaisse ou d'une seconde cisaille à tambours (5) pour une bande à chaud mince sur la base de l'épaisseur (2) de la bande à chaud (1),
- dans lequel la première cisaille à tambours (4) est sélectionnée pour une bande à chaud épaisse d'une épaisseur comprise entre 4 mm et 28 mm, de préférence entre 6 mm et 28 mm, et une vitesse de défilement de bande inférieure à 2,25 m/s, et la seconde cisaille à tambours (5) est sélectionnée pour une bande à chaud mince d'une épaisseur comprise entre 0,6 mm et 6 mm et une vitesse de défilement de bande supérieure à 1,5 m/s ;
- refroidissement de la bande à chaud (1) dans la section de refroidissement (3) ;
- mise en place d'une première unité à rouleaux entraîneurs (6) avant la seconde cisaille à tambours (5) et d'une deuxième unité à rouleaux entraîneurs (7) après la seconde cisaille à tambours (5) contre la bande à chaud mince pour stabiliser la bande à chaud mince lors de la coupe transversale ;
- coupe transversale de la bande à chaud (1) refroidie par la première (4) ou la seconde cisaille à tambours (5) sélectionnée ; et
- évacuation de la bande à chaud (1) coupée transversalement au moyen d'un dispositif d'évacuation (8).

10. Procédé selon la revendication 9, **caractérisé**
- **en ce que** la première unité à rouleaux entraîneurs (6) et la deuxième unité à rouleaux entraîneurs (7) sont mises en place contre la bande à chaud mince et réduisent une tension de bande dans une zone entre les unités à rouleaux entraîneurs (6, 7) pour stabiliser la bande à chaud mince, et
- la bande à chaud mince refroidie est coupée transversalement, tandis que sa tension est réduite, par la seconde cisaille à tambours (5).

11. Procédé selon les revendications 9 et 10, **caractérisé**
- **en ce qu'**au moins deux unités à rouleaux entraîneurs du groupe la première unité à rouleaux entraîneurs (6), la deuxième unité à rouleaux entraîneurs (7) et la troisième unité à rouleaux entraîneurs (9) sont mises en place contre la bande à chaud (1) de façon qu'une cisaille à tambours sélectionnée, à savoir la première cisaille à tambours (4) pour une bande à chaud épaisse et la seconde cisaille à tambours (5) pour une bande à chaud mince, soit disposée dans une zone entre les unités à rouleaux entraîneurs mises en place, les unités à rouleaux entraîneurs mises en place stabilisant la bande à chaud (1) et réduisant une tension de bande dans la zone entre les unités à rouleaux entraîneurs mises en place,
- et la bande à chaud refroidie est coupée transversalement, tandis que sa tension est réduite, par la première (4) ou la seconde cisaille à tambours (5) sélectionnée.

12. Procédé selon les revendications 9 à 11, **caractérisé**
- **en ce que** la section de refroidissement (3) est commandée, pour un segment de bande à chaud (26) préalablement déterminé, de façon qu'un refroidissement soit réduit dans le segment de bande à chaud (26) et que la coupe transversale soit réalisée dans le segment de bande à chaud (26).

13. Procédé selon les revendications 9 à 12, **caractérisé**
- **en ce que** la première cisaille à tambours (4) fonctionne dans un mode marche-arrêt, la cisaille à tambours (4) subissant, pour la coupe transversale de la bande à chaud épaisse, une accélération en partant de l'arrêt de la cisaille à tambours (4) pour atteindre une vitesse de coupe transversale,
- et la première cisaille à tambours (4) est arrêtée après la coupe transversale de la bande à chaud épaisse.

14. Procédé selon les revendications 9 à 13, **caractérisé**
- **en ce que** la seconde cisaille à tambours (5) tourne en permanence, au moins un tambour supérieur ou un tambour inférieur de la seconde cisaille à tambours (5) étant déplacé, pour la coupe transversale, dans une position de coupe transversale, en ce qu'une lame du tambour supérieur et une lame du tambour inférieur se chevauchent lors de la coupe transversale et coupent transversalement la bande à chaud mince.

15. Procédé selon les revendications 9 à 14, **caractérisé**
- **en ce que** la bande à chaud (1) est laminée dans un train de laminage à chaud monté en amont du dispositif de coupe transversale.

16. Procédé selon les revendications 9 à 15, **caractérisé**
- **en ce que** la bande à chaud (1) est produite dans une installation composite de coulée-laminage, de préférence fonctionnant en continu.

17. Procédé selon les revendications 9 à 15, **caractérisé**
- **en ce qu'**une première masse d'inertie (29) pouvant être couplée de la première cisaille à tambours (4) est découplée de le premier groupe motopropulseur et est couplée uniquement pour la coupe transversale à faibles vitesses de défilement de bande inférieures ou égales à 1 m/s, et
- une seconde masse d'inertie (35), de préférence pouvant être couplée, de la seconde cisaille à tambours (5) est couplée en permanence.
